# EUROPEAN PATENT SPECIFICATION

(11) **EP 1 212 213 B1**
(45) Date of publication and mention of the grant of the patent: **02.11.2005**
(21) Application number: 00956295.0
(22) Date of filing: 26.07.2000
(51) Int. Cl.: B60R 21/20

(54) **AIRBAG MODULE**
AIRBAGMODUL
MODULE D'AIRBAG

(30) Priority: 27.08.1999 DE 19940776
(43) Date of publication of application: 12.06.2002
(73) Proprietor: Delphi Technologies, Inc., Troy, MI 48007 (US)
(72) Inventor: GUTHKE, Detlev, D-42367 Hagen (DE); NILSON, Hans, G., D-42369 Wuppertal (DE); ZIMMERBEUTEL, Bernd, U., D-42857 Remscheid (DE)
(74) Representative: Denton, Michael John
(86) International application number: PCT/EP2000/007183
(87) International publication number: WO 2001/015941

(56) References cited:
- EP-A- 0 855 315
- EP-A- 0 933 263
- WO-A-99/42333
- DE-A- 19 752 989

## Description

The invention relates to an airbag module for motor vehicles comprising a folded inflatable airbag.

Airbag modules of this kind are known in principle and serve to mount the folded airbag together with a gas generator for inflating the airbag in the vehicle.

In side airbags the airbag is a constituent of an elongate airbag module which e.g. is arranged in the region of the transition between the roof and the side wall of the vehicle. After the gas generator is triggered in the event of an accident the airbag deploys vertically downwards in the manner of a curtain in order to create a protective air cushion between the side wall of the vehicle and the respective vehicle passenger. Side airbags of this kind are therefore also designated as "side curtains".

In particular in side airbags the positioning of the folded airbag or of the module comprising the folded airbag respectively is important, since the airbag module should fit well into the design of the vehicle interior not least for optical reasons, and in addition it must be ensured that the airbag can deploy without problem in the predetermined manner in the event of an accident. EP-A-0855315 ; DE-A-19752989 and EP-A-0933262 disclose airbag modules in accordance with the preamble of Claim.

The object (problem) of the invention is to create an airbag module of the initially named kind which can be mounted in a predetermined position in the vehicle in a simple manner without impairing the reliable deployment of the airbag, and which is in particular simple to manufacture and has as small a constructional size as possible.

This object is satisfied through the features of claim 1 and in particular in that at least one accommodation for the folded inflatable airbag and at least one shape giving element are provided, the shape giving element being arranged together with the airbag in the accommodation when the module is assembled, as defined in the characterizing portion of Claim 1.

The arrangement of shape giving elements within the accommodation for the airbag enables a shape stability to be imparted to the airbag module without substantially increasing the constructional size of the airbag module. The form of the shape giving element is preferably matched to the vehicle in which the airbag module is in each case to be mounted. The assembled airbag module, which is dimensionally stable as a result of the shape giving element in accordance with the invention, can as a result be fitted exactly into the vehicle without problem. The shape stability of the airbag module simplifies this mounting considerably. The compactness of the airbag module in accordance with the invention which is achieved through the inwardly lying shape giving element minimizes its space requirement.

The accommodation for the airbag can be formed in the shape of a hose or a tube and e.g. be a constituent of a side airbag in the form of a "side curtain". The accommodation can however also be an e.g. cylindrical or pot-shaped housing, such as is used in connection with drivers' airbags and front passengers' airbags. If housings of this kind have flexible wall regions e.g. of textile material, then shape stability can also be imparted to housings of this kind through the invention in that correspondingly formed shape giving elements are used.

The accommodation is formed with double walls at least in the region of the shape giving element. When the airbag module is assembled the shape giving element is then arranged between the two walls of the accommodation and is not in direct contact with the airbag, which is likewise arranged in the accommodation. The double walled region can be formed in such a manner that it forms a pocket or a pocket-like region for the shape giving element. The shape giving element can be simply laid or inserted into a double walled and/or pocket-like region. In this the arrangement of the shape giving element in the accommodation can either already take place during the production of the accommodation or only during the assembly of the airbag module.

In an accommodation consisting at least substantially of textile material, the double walled or pocket-like region respectively can already be formed during the production of the accommodation through corresponding sewing of the material which forms the accommodation.

In a particularly preferred exemplary embodiment of the invention the shape giving element is sewn into the accommodation. Through this, shape stability can already be imparted to the accommodation during its production.

The shape giving element, which is preferably manufactured of plastic, can e.g. be formed as a flat strip which is approximately rectangular or at least has a rectangular basic shape. In a preferred variant of the invention at least two shape giving elements of this kind are provided, with the airbag being arranged in the accommodation between the two shape giving elements when the module is assembled.

In principle the shape giving element can have any form which is required for the respective use and can also deviate from the rectangular shape. In this the shape giving element can in principle have any desired outer contour, and in particular also an irregular one. Furthermore, the shape giving element can be executed to be curved in order e.g. to impart shape stability to flexible side wall regions of for example pot-like accommodation housings.

In the accommodation a pocket-like or double walled region respectively is preferably provided for each shape giving element, into which the shape giving elements are either sewn or inserted during the assembly of the airbag module. In the assembled module the two shape giving elements are preferably arranged in the accommodation with mutually facing flat sides which bound the space which is available for the folded airbag in the accommodation. At least in the region of the shape giving elements, which can extend either substantially over the entire length of the accommodation or merely along a part of the accommodation, the folded airbag is then reliably positioned between the shape giving elements.

Through the invention a method for the manufacture of an airbag module for motor vehicles is also protected in which in a hose shaped or tube shaped accommodation for a folded inflatable airbag at least one double walled and/or pocket-like region is formed and at least one shape giving element is arranged in the region.

The shape giving element is preferably sewn into the accommodation, with the sewing in of the shape giving element preferably already taking place during the production of the accommodation.

Preferred embodiments of the invention are also set forth in the dependent claims, in the description and in the drawings.

The invention will be described in the following in an exemplary manner with reference to the drawings. Shown are:
- Fig. 1a: an airbag module in accordance with an embodiment of the invention in a pre-assembly state,
- Fig. 1b: the airbag module of Fig. 1a during the assembly,
- Fig. 2: an embodiment of a shape giving element for an airbag module in accordance with the invention.
- Fig. 3: a further embodiment of a shape giving element for an airbag module in accordance with the invention,
- Fig. 4: a sectioned side view of an assembled airbag module in accordance with an embodiment of the invention
and
- Fig. 5: a view corresponding to Fig. 4 of an assembled airbag module in accordance with a further embodiment of the invention.

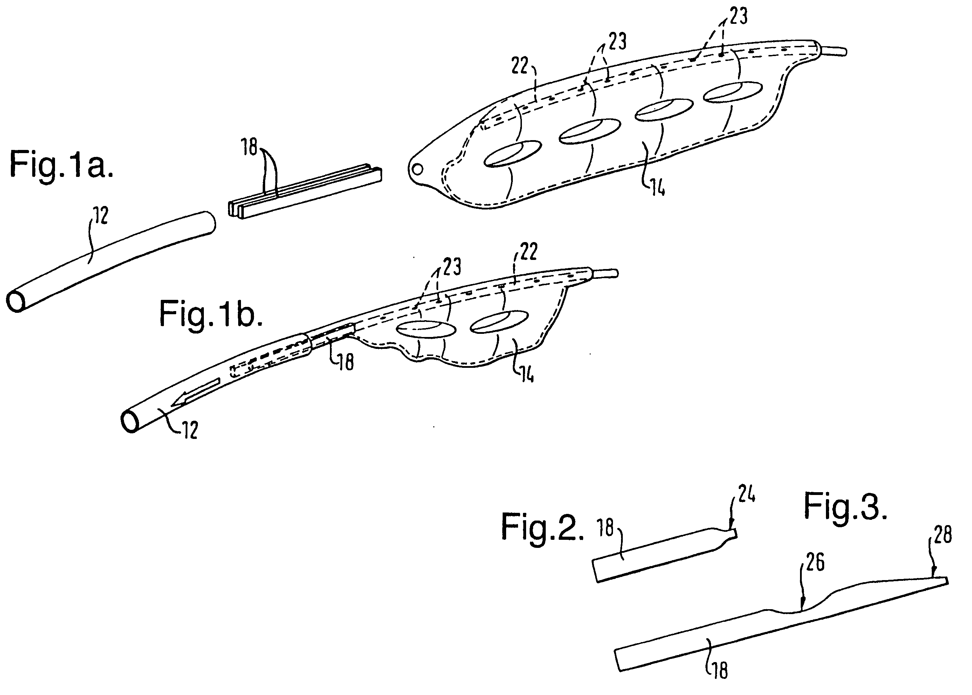

The airbag module of Figs. 1a and 1b comprises a hose-like accommodation 12 of textile material, two shape giving elements 18 which are formed as flat rectangular strips, and an airbag 14 in which a gas conducting tube 22 is arranged. The gas conducting tube 22 is in connection with a non-illustrated gas generator of the airbag module, by means of which the airbag 14 can be inflated in the event of an accident via the gas conducting tube 22 and via gas outlet openings 23 which are formed in the gas conducting tube 22. The airbag 14 is a side airbag which is e.g. arranged in the region of the roof frame of a vehicle and deploys downwards in the manner of a curtain in the event of an accident after the triggering of the gas generator. In the inflated state the airbag 14 forms a mattress-like protective cushion between the vehicle side wall and the respective vehicle passenger. The airbag 14 is also designated as a "roof rail airbag" or "side curtain".

Furthermore, the accommodation 12 is provided with a tear-open seam or perforation which is not illustrated in Figs. 1a and 1b and which extends in the longitudinal direction of the accommodation 12. In the event of an accident the accommodation 12 is torn open at the tear-open seam or perforation through the deploying airbag 14, which can thereby emerge out of the accommodation 12 and completely deploy.

The accommodation 12 can be formed or extruded of plastic. It is also possible to use a shrinking film as an accommodation 12. In principle any material from which a hose-like or tube-like structure can be produced, may be used in accordance with the invention. Materials which can be sewn are preferably used for the accommodation 12.

Furthermore, the accommodation 12 is provided with double walled regions for the strip-like shape giving elements 18, which are not illustrated in Figs. 1a and 1b. The shape giving elements 18 are inserted into the double walled regions during the assembly. The shape giving elements 18 are thus located in a predetermined position relative to the accommodation 12 in the assembled airbag module.

The shape giving elements 18 are manufactured of plastic, with it also being possible in principle to use other materials. The material and the dimensions of the shape giving elements 18 are in each case chosen such that the shape giving elements 18 have as high a stiffness as possible with the lowest possible weight. In the assembled airbag module its shape is thus determined by the shape of the elements 18.

During the assembly of the airbag module in accordance with Fig. 1b the airbag 14 and the gas conducting tube 22 lie between the two shape giving elements 18. The shape giving elements 18 are inserted with mutually facing flat sides into the non-illustrated double walled regions of the accommodation 12. Between the shape giving elements 18 and the airbag 14 there is thus a wall of the accommodation 12 which comprises at least one layer of the textile material forming the accommodation 12.

The airbag 14, which in Fig. 1b is already partly pushed between the shape giving elements 18 and introduced into the accommodation 12, is folded together during the assembly of the airbag module. In this it can be provided for through suitable measures that the airbag envelope is laid into folds in a definite manner. It is however also possible to stuff the airbag envelope into the accommodation 12 and to squash it together in an irregular manner in the process, through which a so-called "chaotic" folding results. Chaotic foldings without undercuttings or at least with few undercuttings can be achieved which ensure a reliable and rapid deployment of the airbag 14 in the event of an accident.

In the non-illustrated completely assembled state of the airbag module the shape giving elements 18 are completely and the airbag 14 is partly located within the accommodation 12. The length of the accommodation 12 can also be dimensioned in such a manner that the airbag 14 can be completely introduced into the accommodation 12.

In principle the shape giving elements in accordance with the invention can have any desired form in dependence on the respective vehicle.

Instead of straight shape giving elements, elements which are bent or curved in any desired manner can also be provided. In principle the shape giving elements can have any desired regular or irregular outer contour and e.g. be provided with edges which extend in a wave-like manner.

Figs. 2 and 3 show in a merely exemplary manner possible variants, in which in each case a rectangular basic shape was used as starting point.

The shape giving element 18 in accordance with Fig. 2 is a rectangular strip with a tapering end region 24.

The shape giving element in accordance with Fig. 3 is approximately twice as long as the element which is illustrated in Fig. 2 and is provided with an indentation 26. Between the indentation 26 and an end region 28 a tapering region is present as a result of a longitudinal edge which extends at an inclination.

The shorter shape giving element 18 of Fig. 2 is e.g. a constituent of an airbag module for side airbags, which are provided either only for the front seats or only for the rear seats of a motor vehicle. On the contrary the longer shape giving element 18 of Fig. 3 is for example provided for side airbags which extend along the entire vehicle interior space and at the same time serve for the protection of the persons of the motor vehicle sitting in the front and at the rear. The end region 24 of the element 18 of Fig. 2 and the indentation 26 of the element 18 of Fig. 3 are then located in the region of the roof-side end of the B column when the airbag module is mounted in the vehicle.

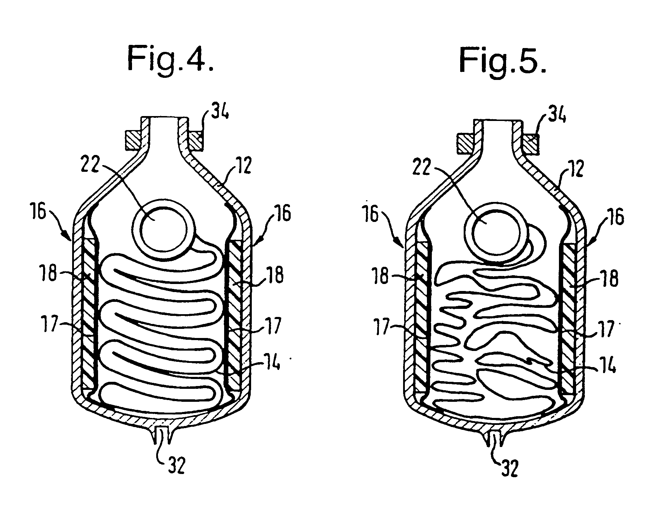

Figs. 4 and 5 show in each case a cross-section through an assembled airbag module in accordance with the invention. The two embodiments differ basically through the manner of the folding of the airbag 14.

In accordance with Fig. 4 the airbag 14 is laid regularly into folds in such a manner that the airbag envelope extends in meander shape starting from a tear-open seam or perforation 32 of the accommodation 12 up to a gas conducting tube 22 at which the airbag 14 is fastened with its open end. In the example of Fig. 5 on the contrary the airbag 14 is folded "chaotically", i.e. the airbag envelope is stuffed into the accommodation 12 and in this is irregularly squashed together.

In both embodiments the accommodation 12 is provided with double walled regions 16 for flat strip-like shape giving elements 18. The double walled regions 16 have in each case been formed during the manufacture of the accommodation 12 consisting of textile material through sewing in of at least one additional textile or fabric layer 17. The layers 17 are located in the assembled airbag module between the airbag 14 and the respective shape giving element 18.

On the side of the accommodation 12 lying opposite to the tear-open seam or perforation 32 respectively and thus in the region of the gas conducting tube 22 the accommodation 12 is in each case held together by a bracket or another suitable retainer device 34. The accommodation 12 can also be sewn together in this region.

From Figs. 4 and 5 it can be recognized that the space requirement for the shape giving elements 18 is a minimum. Airbag modules can thus be realized in accordance with the invention which are dimensionally stable and compact at the same time.

Independently of the concrete design of the shape giving elements 18 and the accommodation 12 the elements 18 can in accordance with the invention extend either over the entire length of the accommodation 12 or merely along a part of the accommodation 12. In this the double walled and/or pocket-like regions 16 of the accommodation 12 can either be provided over the entire length of the accommodation 12 or merely be formed in the regions which are provided for the shape giving elements 18.

In addition it is in principle possible in accordance with the invention to provide only one single shape giving element 18 which is to be arranged within the accommodation 12.

The shape giving elements 18 can be sewn into the accommodation 12 during the production of the latter, so that they can not be removed from the accommodation 12 and can not slide out of the accommodation 12 by themselves.

It is also possible in the production of the accommodation 12 ― instead of merely double walled regions which are open at both end sides ― to form pockets in the accommodation 12 which are open at one end side, so that for the manufacture of the airbag module the shape giving elements 18 can in each case be inserted into the pocket via the open end side.

In principle the invention can be used in connection with any airbag desired. Shape stability can also be imparted e.g. to drivers' airbags and front passengers' airbags with so-called "wrap housings" through the invention.

"Wrap housings" of this kind are housing-like accommodations for drivers' and front passengers' airbags which e.g. are accommodated in the dashboard or in the steering wheel respectively of a motor vehicle. These housings comprise a stable frame, which forms a basic framework or skeleton, as well as wall regions of flexible material, e.g. textile material, which is connected to the frame in order to form an at least partly surrounded space. The base and the cover of the housing can also consist of flexible material. The housings thus form tent-like structures. At the flexible wall regions (side wall, base and/or cover) shape giving elements which are formed in accordance with the desired shape of the housing can be provided in the manner that has been described above in connection with the hose-like or tube-like accommodation. In this way not only hose-like or tube-like accommodations, but also the "wrap housings" can be stabilized by the invention.

### List of reference symbols

- 12: accommodation
- 14: airbag
- 16: double walled region
- 17: layer
- 18: shape giving element
- 22: gas conducting tube
- 23: gas outlet opening
- 24: end region
- 26: indentation
- 28: end region
- 32: tear-open seam, perforation
- 34: retainer device

## Claims

1. Airbag module for motor vehicles comprising at least one accommodation (12) for a folded inflatable airbag (14) and at least one shape giving element (18) which is arranged together with the airbag (14) in the accommodation (12) when the module is assembled,
**characterized in that** the accommodation (12) comprises a double walled region (1b) of flexible material, the shape giving element (18) consisting of a separate insert and being located between the walls (17,12) of the double walled region.

2. Airbag module in accordance with claim 1,
**characterized in that**
the accommodation (12) is formed in the shape of a hose or tube.

3. Airbag module in accordance with claim 1 or claim 2,
**characterized in that**
at least one pocket-like region (16) for the shape giving element (18) is formed within the accommodation (12).

4. Airbag module in accordance with at least one of the preceding claims,
**characterized in that**
the shape giving element (18) can be inserted from the outside into a pocket-like and/or double walled region (16) of the accommodation (12).

5. Airbag module in accordance with at least one of the claims 1 to 3,
**characterized in that**
the shape giving element (18) is sewn into the accommodation (12), which preferably consists at least substantially of textile material.

6. Airbag module in accordance with at least one of the preceding claims,
**characterized in that**
the shape giving element (18) is manufactured of plastic.

7. Airbag module in accordance with at least one of the preceding claims,
**characterized in that**
the shape giving element (18) is formed as a flat strip.

8. Airbag module in accordance with at least one of the preceding claims,
**characterized in that**
the shape giving element (18) is approximately rectangular or at least has a rectangular basic shape.

9. Airbag module in accordance with at least one of the preceding claims,
**characterized in that**
the shape giving element (18), which is arranged in the accommodation (12), extends substantially over the entire length of the accommodation (12).

10. Airbag module in accordance with at least one of the claims 1 to 8,
**characterized in that**
the shape giving element (18), which is arranged in the accommodation (12), extends only along a part of the accommodation (12).

11. Airbag module in accordance with at least one of the preceding claims,
**characterized in that**
the pocket-like and/or double walled region (16) of the accommodation (12) is formed only in the region which is provided for the shape giving element (18).

12. Airbag module in accordance with at least one of the preceding claims,
**characterized in that**
at least two shape giving elements (18) are provided and, when the module is assembled, the airbag (14) is arranged in the accommodation (12) between the two shape giving elements (18).

13. Airbag module in accordance with claim 12,
**characterized in that**
when the module is assembled the shape giving elements (18) are arranged in the accommodation (12) with flat sides facing one another.

## Patentansprüche

1. Airbag-Modul für Kraftfahrzeuge, das wenigstens einen Aufnahmeraum (12) für einen zusammengefalteten, aufblasbaren Airbag (14) und wenigstens ein formgebendes Element (18), das zusammen mit dem Airbag (14) in dem Aufnahmeraum (12) angeordnet ist, wenn das Modul zusammengefügt ist, umfasst,
**dadurch gekennzeichnet, dass**
der Aufnahmeraum (12) einen doppelwandigen Bereich (16) aus einem flexiblen Material umfasst, wobei das formgebende Element (18) aus einem separaten Einsatz besteht und sich zwischen den Wänden (17, 12) des doppelwandigen Bereichs befindet.

2. Airbag-Modul nach Anspruch 1,
**dadurch gekennzeichnet, dass**
der Aufnahmeraum (12) in Form eines Schlauchs oder Rohrs ausgebildet ist.

3. Airbag-Modul nach Anspruch 1 oder Anspruch 2,
**dadurch gekennzeichnet, dass**
in dem Aufnahmeraum (12) wenigstens ein taschenartiger Bereich (16) für das formgebende Element (18) ausgebildet ist.

4. Airbag-Modul nach wenigstens einem der vorhergehenden Ansprüche,
**dadurch gekennzeichnet, dass**
das formgebende Element (18) von außen in einen taschenartigen und/oder doppelwandigen Bereich (16) des Aufnahmeraums (12) eingesetzt werden kann.

5. Airbag-Modul nach wenigstens einem der Ansprüche 1 bis 3,
**dadurch gekennzeichnet, dass**
das formgebende Element (18) in den Aufnahmeraum (12), der vorzugsweise wenigstens im Wesentlichen aus Textilmaterial besteht, genäht ist.

6. Airbag-Modul nach wenigstens einem der vorhergehenden Ansprüche,
**dadurch gekennzeichnet, dass**
das formgebende Element (18) aus Kunststoff hergestellt ist.

7. Airbag-Modul nach wenigstens einem der vorhergehenden Ansprüche,
**dadurch gekennzeichnet, dass**
das formgebende Element (18) als ein flacher Streifen ausgebildet ist.

8. Airbag-Modul nach wenigstens einem der vorhergehenden Ansprüche,
**dadurch gekennzeichnet, dass**
das formgebende Element (18) angenähert rechtwinklig ist oder zumindest eine rechtwinklige Grundform hat.

9. Airbag-Modul nach wenigstens einem der vorhergehenden Ansprüche,
**dadurch gekennzeichnet, dass**
das formgebende Element (18), das in dem Aufnahmeraum (12) angeordnet ist, sich im Wesentlichen über die gesamte Länge des Aufnahmeraums (12) erstreckt.

10. Airbag-Modul nach wenigstens einem der Ansprüche 1 bis 8,
**dadurch gekennzeichnet, dass**
das formgebende Element (18), das in dem Aufnahmeraum (12) angeordnet ist, sich nur über einen Teil des Aufnahmeraums (12) erstreckt.

11. Airbag-Modul nach wenigstens einem der vorhergehenden Ansprüche,
**dadurch gekennzeichnet, dass**
der taschenähnliche und/oder doppelwandige Bereich (16) des Aufnahmeraums (12) nur in jenem Bereich ausgebildet ist, der für das formgebende Element (18) vorgesehen ist.

12. Airbag-Modul nach wenigstens einem der vorhergehenden Ansprüche,
**dadurch gekennzeichnet, dass**
wenigstens zwei formgebende Elemente (18) vorgesehen sind und der Airbag (14) dann, wenn das Modul zusammengefügt ist, in dem Aufnahmeraum (12) zwischen den zwei formgebenden Elementen (18) angeordnet ist.

13. Airbag-Modul nach Anspruch 12,
**dadurch gekennzeichnet, dass**
die formgebenden Elemente (18) dann, wenn das Modul zusammengefügt ist, in dem Aufnahmeraum (12) mit einander zugewandten flachen Seiten angeordnet sind.

## Revendications

1. Coussin gonflable de sécurité pour véhicules automobiles comprenant au moins un logement (12) prévu pour un coussin gonflable (14) replié, et au moins un élément conformateur (18) qui est disposé avec le coussin gonflable (14) dans le logement (12) lorsque le module est assemblé, **caractérisé en ce que** le logement (12) comprend une région à double paroi (16) en matière flexible, l'élément conformateur (18) étant constitué par un insert séparé et étant placé entre les parois (17, 12) de la région à double paroi.

2. Coussin gonflable de sécurité selon la revendication 1,
**caractérisé en ce que**
le logement (12) est conformé selon la forme d'un tuyau ou d'un tube ;

3. Coussin gonflable de sécurité selon la revendication 1 ou 2,
**caractérisé en ce qu'**
au moins une région en forme de poche (16) prévue pour l'élément conformateur (18) est formée dans le logement (12).

4. Module de coussin gonflable de sécurité selon au moins une des revendications précédentes,
**caractérisé en ce que**
l'élément conformateur (18) peut être inséré de l'extérieur dans une région en forme de poche et/ou à double paroi (16) du logement (12).

5. Module de coussin gonflable de sécurité selon au moins une des revendications 1 à 3,
**caractérisé en ce que**
l'élément conformateur (18) est cousu dans le logement (12) qui est de préférence composé au moins essentiellement de matière textile ;

6. Module de coussin gonflable de sécurité selon au moins une des revendications précédentes,
**caractérisé en ce que**
l'élément conformateur (18) est fabriqué en matière plastique.

7. Module de coussin gonflable de sécurité selon au moins une des
revendications précédentes,
**caractérisé en ce que**
l'élément conformateur (18) est formé d'une bande plate.

8. Module de coussin gonflable de sécurité selon au moins une des
revendications précédentes,
**caractérisé en ce que**
l'élément conformateur (18) est approximativement rectangulaire ou, du moins, possède une forme de base rectangulaire.

9. Module de coussin gonflable de sécurité selon au moins une des
revendications précédentes,
**caractérisé en ce que**
l'élément conformateur (18) qui est disposé dans le logement (12) s'étend sensiblement sur toute la longueur du logement (12).

10. Module de coussin gonflable de sécurité selon au moins une des
revendications 1 à 8,
**caractérisé en ce que**
l'élément conformateur (18) qui est disposé dans le logement (12) ne s'étend que le long d' une partie du logement (12).

11. Module de coussin gonflable de sécurité selon au moins des revendications
précédentes,
**caractérisé en ce que**
la région (16) en forme de poche et/ou à double paroi du logement (12) est formée seulement dans la région qui est prévue pour l'élément conformateur (18).

12. Module de coussin gonflable de sécurité selon au moins des revendications
précédentes,
**caractérisé en ce qu'**
il est prévu au moins deux éléments conformateurs (18) et que, lorsque le module est assemblé, le coussin gonflable (14) est disposé dans le logement (12) entre les deux éléments conformateurs (18).

13. Module de coussin gonflable de sécurité selon la revendication 12,
**caractérisé en ce que**,
lorsque le module est assemblé, les éléments conformateurs (18) sont disposés dans le logement (12) avec des faces plates disposées face à face.
